(19) **Europäisches Patentamt / European Patent Office / Office européen des brevets**

(11) **EP 1 703 266 B1**

(12) **FASCICULE DE BREVET EUROPEEN**

(45) Date de publication et mention
de la délivrance du brevet:
**05.05.2010 Bulletin 2010/18**

(51) Int Cl.:
***G01J 5/20*** (2006.01)

(21) Numéro de dépôt: **06300208.3**

(22) Date de dépôt: **08.03.2006**

(54) **Détecteur bolométrique, dispositif de détection infrarouge mettant en oeuvre un tel détecteur et procédé de fabrication de ce détecteur**

Bolometrischer Detektor, Vorrichtung zur Infrarotmessung mittels dieses Detektors und entsprechendes Herstellungsverfahren

Bolometric detector, infrared detecting device using it and associated production process

(84) Etats contractants désignés:
**DE FR GB IT SE**

(30) Priorité: **16.03.2005 FR 0502580**

(43) Date de publication de la demande:
**20.09.2006 Bulletin 2006/38**

(73) Titulaire: **ULIS**
**38113 Veurey Voroize (FR)**

(72) Inventeur: **VILAIN, Michel**
**38450, SAINT GEORGES DE COMMIERS (FR)**

(74) Mandataire: **Vuillermoz, Bruno et al**
**Cabinet Laurent & Charras**
**"Le Contemporain"**
**50, Chemin de la Bruyère**
**69574 Dardilly Cédex (FR)**

(56) Documents cités:
**EP-A- 0 828 145     US-A- 5 760 398**

Printed by Jouve, 75001 PARIS (FR)

## Description

### DOMAINE TECHNIQUE

La présente invention concerne un détecteur bolométrique, ainsi que le dispositif de détection infrarouge mettant en oeuvre un tel détecteur. Elle concerne également le procédé de réalisation d'un tel détecteur. L'invention trouve notamment son domaine d'application dans l'imagerie infrarouge.

### ETAT ANTERIEUR DE LA TECHNIQUE

Dans le domaine des détecteurs infrarouges, il est connu des dispositifs agencés sous forme matricielle, et susceptibles de fonctionner à la température ambiante, c'est à dire ne nécessitant pas de refroidissement, contrairement aux dispositifs de détection appelés détecteurs « quantiques », qui eux nécessitent un fonctionnement à très basse température, typiquement celle de l'azote liquide.

Ces détecteurs non refroidis utilisent traditionnellement la variation d'une grandeur physique d'un matériau approprié, en fonction de la température au voisinage de 300 K. Dans le cas des détecteurs bolométriques, cette grandeur physique est la résistivité électrique.

Un tel détecteur non refroidi associe généralement :

- des moyens d'absorption du rayonnement infrarouge et de conversion de ce dernier en chaleur ;
- des moyens d'isolation thermique du détecteur, de telle sorte à permettre à celui-ci de s'échauffer sous l'action du rayonnement infrarouge ;
- des moyens de thermométrie, qui dans le cadre d'un détecteur bolométrique mettent en oeuvre un élément résistif ;
- des moyens de lecture des signaux électriques fournis par les moyens de thermométrie.

Les détecteurs destinés à l'imagerie infrarouge sont réalisés sous la forme d'une matrice de détecteurs élémentaires selon une ou deux dimensions, sur un substrat, généralement réalisé en silicium, qui comporte des moyens d'excitation électrique desdits détecteurs élémentaires, et des moyens de pré-traitement des signaux électriques générés par ces détecteurs élémentaires.

Ces moyens d'excitation électrique et de pré-traitement sont formés sur le substrat et constituent un circuit de lecture.

L'intégration monolithique des détecteurs au circuit de lecture correspondant est avantageuse du point de vue des coûts de fabrication. Toutefois, il est également possible d'hybrider une matrice de détecteurs réalisés sur un second substrat indépendant, sur un tel circuit de lecture.

Un dispositif comportant une matrice de détecteurs élémentaires et un circuit de lecture associé est généralement placé dans un boîtier et relié, notamment électriquement, au milieu extérieur par des techniques classiques (fils métalliques et broches de montage). Dans un tel boîtier, la pression est réduite afin de limiter les pertes thermiques. Ce boîtier est en outre muni d'une fenêtre transparente au rayonnement à détecter.

Pour observer une scène par l'intermédiaire de ce détecteur, on projette la scène à travers une optique adaptée sur la matrice de détecteurs élémentaires, et des stimuli électriques cadencés sont appliqués, par l'intermédiaire du circuit de lecture (également prévu à cet effet), à chacun des détecteurs élémentaires, ou à chaque rangée de tels détecteurs, afin d'obtenir un signal électrique constituant l'image de la température atteinte par chaque détecteur élémentaire.

Ce signal est traité de manière plus ou moins élaborée par le circuit de lecture, puis éventuellement par un dispositif électronique extérieur au boîtier, afin de générer une image thermique de la scène observée.

Les performances des détecteurs bolométriques non refroidis dépendent essentiellement :

- de la maîtrise d'élaboration et d'intégration des matériaux bolométriques les plus performants au sein de structures très légères constituées par des microponts bolométriques isolés thermiquement du circuit de lecture, afin d'en tirer le meilleur parti en termes de rapport signal/bruit ;
- de la maîtrise de la constante de temps thermique de réponse à une variation de température de scène ;
- de l'uniformité spatiale de chacun des paramètres pour un coût d'élaboration aussi réduit que possible.

L'état antérieur de la technique décrit diverses manières de disposer les divers éléments constitutifs des détecteurs élémentaires.

On distingue principalement les détecteurs à électrodes coplanaires, et les détecteurs à électrodes parallèles (structure dite « sandwich »).

L'invention concerne plus particulièrement les détecteurs à électrodes coplanaires, dans lesquels le courant électrique qui traverse la structure en fonctionnement, circule dans le plan de la couche de matériau bolométrique.

Ce type de détecteur est généralement construit sous forme d'une membrane suspendue, qui comporte une couche mince (typiquement entre 0,1 et 1 $\mu$m) de matériau bolométrique sensible à la température, de deux électrodes dites coplanaires, en ce sens qu'elles sont disposées sur la même face du matériau bolométrique, et d'un « absorbeur ». Par absorbeur, on désigne une ou plusieurs couches ou arrangements de couches, dont la fonction est de capter le rayonnement électromagnétique pour le convertir en chaleur au sein de la structure. Des dispositions complémentaires sont destinées à soutenir la membrane et à produire une résistance thermique aussi élevée que possible entre la membrane, destinée à s'échauffer sous l'effet du rayonnement, et le circuit de lecture.

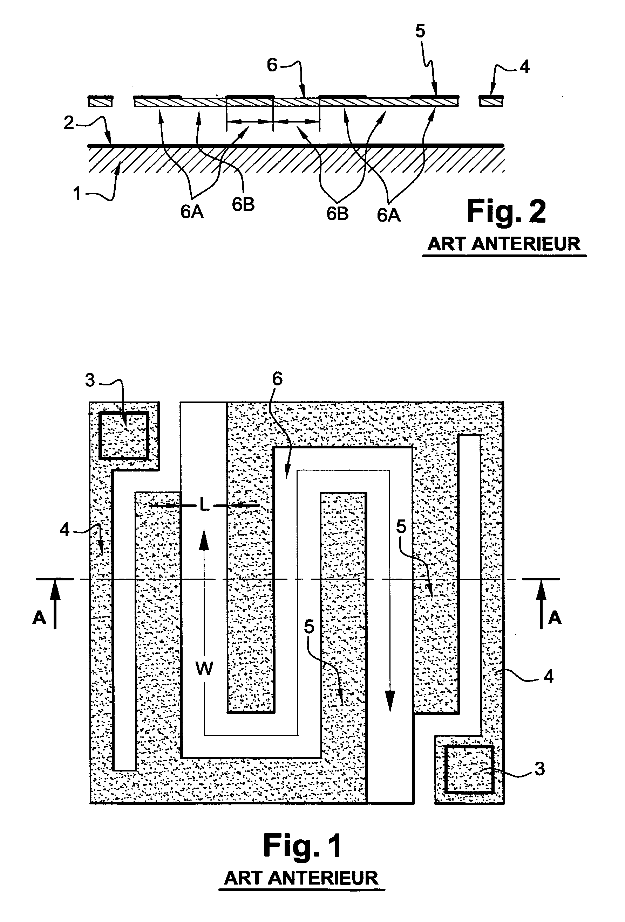

On a décrit dans le document EP-A-0 828 145, un détecteur bolométrique comportant un circuit de lecture et un ou plusieurs détecteurs élémentaires comportant eux-mêmes une partie sensible intégrant notamment une couche de matériau bolométrique ainsi que deux électrodes conductrices, et au moins un élément support de cette partie sensible, et dans laquelle les électrodes sont inter-digitées. On a schématiquement représenté sur les figures 1 et 2, une représentation de ce détecteur bolométrique élémentaire.

Au sein de celui-ci, le circuit de lecture (1) est recouvert d'une couche métallique réfléchissante (2), destinée à renvoyer le rayonnement infrarouge non absorbé par le bolomètre lui-même, ce dernier étant situé à environ 1,5 à 2,5 μm au-dessus dudit réflecteur (et ce, afin d'optimiser la détection autour de 10 μm de longueur d'onde, correspondant sensiblement à la plage habituelle de sensibilité préférentielle de ces détecteurs).

Ce positionnement s'effectue au moyen de structures essentiellement verticales (3). Ces structures, dénommées « piliers » dans la suite de la description, sont elles-mêmes conductrices de l'électricité, et permettent ainsi d'amener les potentiels d'excitation vers les parties conductrices ou électrodes (5) du détecteur bolométrique, via des structures planes allongées (4), également conductrices électriquement, mais résistantes thermiquement. Ces structures planes allongées seront dénommées « bras » dans la suite de la description.

Cette résistance thermique, dite également « isolation thermique », est destinée à permettre l'échauffement du matériau bolométrique sous l'effet du rayonnement infrarouge.

Le volume entre le corps du bolomètre et le réflecteur est vide de matière, en dehors des piliers (3) et ce, afin d'éviter les pertes thermiques par conduction solide. Ce volume est habituellement rempli par une faible pression de gaz, afin de limiter la convection et la conduction thermique par les gaz.

Dans ce type de dispositif, le circuit de lecture applique, via les piliers (3) et les bras (4), et via au moins deux parties conductrices ou électrodes (5), un courant électrique qui traverse la structure parallèlement au plan du détecteur bolométrique. Ce courant circule à travers un matériau bolométrique (6), dont la résistivité varie avec la température. Les matériaux les plus répandus pour cet usage sont l'oxyde de vanadium et le silicium amorphe.

Les parties conductrices ou électrodes (5) sont réalisées à l'aide d'une couche fine conductrice, ordinairement métallique. Elles servent également à réaliser l'absorption du rayonnement infrarouge en raison de leur disposition répartie sur l'extension disponible du détecteur élémentaire, dénommée membrane. On peut observer sur la figure 1 le fait que ces électrodes sont disposées sur la surface supérieure du matériau bolométrique (6). Cependant, lesdites électrodes pourraient tout aussi bien être disposées sur la face inférieure du matériau bolométrique, ou insérées entre deux couches dudit matériau.

La partie active ou membrane du bolomètre, c'est à dire l'extension disponible du détecteur élémentaire hors les piliers (3) et les bras (4), se présente sous la forme de surfaces pratiquement équipotentielles (5), en contact avec les parties (6A) de la couche bolométrique, et de surfaces résistives (6B), parcourues par le courant d'excitation, d'extension définie par les espaces entre les parties (5).

Dans la suite de la description, on distinguera les parties (6A) et (6B) de la couche de matériau bolométrique (6), selon qu'elles sont traversées par le courant d'excitation (6B) ou non traversées par un tel courant (6A).

La performance d'un détecteur bolométrique est exprimée traditionnellement par la résolution thermique NedT (pour l'expression anglo-saxonne *« Noise Equivalent Differential Temperature »).*

On démontre, par exemple dans le document FR 2 796 148, dans l'hypothèse où le niveau de polarisation est suffisant pour que le bruit électrique dans le détecteur soit dominé par le bruit basse fréquence (Bbf), dit en « 1/f », caractéristique en particulier des matériaux amorphes, que la résolution thermique se quantifie par la relation :

$$\frac{1}{NedT} \approx k.(W.L.E)^{1/2} \cdot TCR.Rth$$

dans laquelle :

- k est un paramètre de proportionnalité qu'il n'est pas utile de détailler ici, qui intègre la bande passante du circuit de lecture, le niveau de bruit basse fréquence « en 1/f » du matériau bolométrique (6), la surface du détecteur élémentaire, et l'efficacité d'absorption infrarouge du détecteur élémentaire ;
- W et L sont respectivement les largeur et longueur électriques des lignes de courant à travers le matériau bolométrique (6), que l'on retrouvera sur la figure 1, le produit W.L définissant l'aire des parties (6B) concernées par les lignes de courant ;
- E est l'épaisseur du matériau bolométrique (6) sur la surface concernée par les lignes de courant limitée par les dimensions W et L ;
- TCR est la variation relative de résistance au voisinage de la température de fonctionnement (dR/RdT), caractéristique du matériau bolométrique mis en oeuvre, où R est la résistance électrique vue entre les deux pôles d'amenée du courant (les deux piliers (3)) et T la température du micro-pont ;
- Rth est la résistance thermique entre la partie centrale « massive » du bolomètre qui s'échauffe sous l'effet du rayonnement infrarouge, et le circuit de lecture (1), dont la température est constante ou très lentement variable.

En intégrant les paramètres TCR et Rth dans la constante k, cette expression se réduit à :

$$\frac{1}{\text{NedT}} \approx k'.(W.L.E)^{1/2}$$

Les parties (6A) du matériau bolométrique ne participent pas à la définition de la performance de détection du détecteur bolométrique, car pratiquement aucun courant ne traverse ledit matériau bolométrique à ce niveau, ces zones étant court-circuitées par les parties (5) beaucoup moins résistives électriquement.

Dans le cadre d'une matrice de détection, on définit par p le pas de répétition du détecteur élémentaire selon les deux dimensions du plan.

Afin d'aboutir à une performance de détection optimale, il suffit, selon l'analyse qui précède, de disposer les parties (6B) selon un polygone de longueur (électrique) L et de largeur (électrique) W, avec L . W = p², pour optimiser la performance de détection.

Cette grandeur p² représente la borne supérieure du paramètre L . W, car sur le plan technique, il convient de réserver une partie de l'aire p² pour disposer des espaces de séparation des détecteurs élémentaires entre eux, et au moins les piliers (3) et bras (4) et les zones (6A), dont l'aire ne peut pas être nulle.

Ces grandeurs L et W selon une disposition typique, ont été représentées sur la figure 1.

On observe cependant que l'efficacité de l'absorption des rayonnements électromagnétiques sur de telles structures partiellement tapissées d'une couche conductrice, même optimisée en termes de résistance surfacique (ou résistance de couche) diminue rapidement lorsque l'aire relative des surfaces conductrices (5) est réduite au profit de l'aire relative des surfaces très résistives (6B). En pratique, la meilleure performance en termes de résolution bolométrique est obtenue pour un équilibre entre les aires (5) et (6B). Il en résulte que la moitié environ de l'aire de la membrane du bolomètre (les parties (6A)) n'est pas utilisable pour optimiser les lignes de courant, qui consiste en la maximisation de l'aire totale W.L. du ou des polygone(s) traversés par les lignes de courant.

Les parties conductrices (5) sur la figure 1 présentent le cas particulier d'un dessin interdigité. Ce type de disposition est inévitable pour la mise en oeuvre de matériaux bolométriques de résistivité élevée comme le silicium amorphe et matériaux apparentés, pour obtenir une résistance R de quelques centaines à quelques milliers de kilo-Ohms, pratiques du point de vue du circuit de lecture.

En effet, l'une des difficultés rencontrées par l'homme du métier lors de la définition des structures du bolomètre réside dans la constitution d'une résistance électrique R de valeur adéquate, au voisinage de la température ambiante, vue entre les deux parties conductrices ou électrodes (5) entre lesquelles est appliquée la tension d'excitation.

La conception d'un détecteur bolométrique montre en effet que toute valeur de résistance n'est pas adaptée au circuit de lecture mis en oeuvre par le concepteur du produit.

Il est en général plus pratique, afin d'optimiser les fonctions dudit circuit de lecture, d'adapter le bolomètre aux plages optimales du fonctionnement du circuit de lecture, en termes de tension disponible, plutôt que l'inverse. Il est en effet indispensable d'obtenir un courant électrique suffisamment élevé à travers la membrane lors des périodes d'excitation, afin que la performance du détecteur ne soit pas limitée par un signal trop faible.

L'inconvénient lié à la structure mettant en oeuvre des électrodes inter-digitées, telle que représentée sur la figure 1, réside dans l'apparition de zones au niveau desquelles la densité de courant est supérieure à la densité moyenne, au niveau des extrémités internes des parties conductrices (5) par suite de « l'effet de pointe ». En effet, ces concentrations de courant électrique se traduisent par une augmentation du niveau du bruit électrique défavorable à une performance élevée du détecteur.

Le document EP-A-0 828 145 précité propose également la mise en oeuvre comme matériau bolométrique de matériaux de faible résistivité, tels que typiquement les oxydes de vanadium, en préconisant une répartition des électrodes en bandes droites parallèles et disjointes, en laissant par exemple toutes les bandes internes non connectées, c'est à dire laissées à un potentiel flottant, et en connectant les deux bandes extrêmes aux piliers (3). Dans un tel cas de figure, les lignes de courant sont alors toutes parallèles et uniformes, évitant en cela le bruit électrique supplémentaire associé aux effets de pointe.

Cependant, selon cette configuration, environ la moitié de la surface de la membrane ne peut pas être utilisée à l'optimisation des lignes de courant, puisque le critère d'optimisation de l'absorption infra-rouge impose une répartition sensiblement uniforme des parties conductrices (5) sur la surface de la membrane.

Le document FR-A-2 796 148 précité propose une configuration visant à relâcher la contrainte liée à la qualité d'absorption du rayonnement et d'équilibrage des aires des parties conductrices ou électrodes (5) et des zones (6B) du matériau bolométrique.

Selon les enseignements de ce document, les parties (6A) de contact entre les électrodes (5) et le matériau bolométrique (6) sont réduites à de petites surfaces allongées et étroites. En outre, les électrodes (5) sont isolées du matériau bolométrique sur l'essentiel de leur surface, par l'intercalation d'une couche isolante (7).

Cette technique permet d'utiliser la majeure partie de la surface disponible sur la membrane à l'optimisation du ou des polygones d'aire W.L, et d'obtenir ainsi une amélioration substantielle des performances. Cependant, ce résultat est obtenu au prix d'une complexité additionnelle d'élaboration non négligeable, et complique en outre le problème du bruit excédentaire inhérent à l'effet de pointe, s'il s'avère nécessaire de dessiner des électrodes inter-digitées. Or, cette configuration s'avère inévitable lorsque l'on met en oeuvre du silicium amorphe ou des matériaux apparentés, en raison des résistivités élevées habituellement présentées par ce type de matériau.

On observe donc que dans les deux documents précédents de l'art antérieur, l'absorbeur est réalisé à l'aide de la même couche de matériau, que les électrodes d'amenée de courant, avec tous les avantages liés à cette disposition, mais aussi avec l'inconvénient qui vient d'être décrit pour obtenir une résistance électrique bien adaptée au circuit de lecture.

Dans le document US 5 367 167, l'absorbeur est réalisé à l'aide d'une couche conductrice séparée et différentes des électrodes d'amenée de courant. Ce document décrit un détecteur bolométrique comprenant deux électrodes coplanaires situées sur la même face de la couche de matériau bolométrique, ainsi qu'une couche conductrice située sur l'autre face de cette couche de matériau bolométrique. Cette couche conductrice a pour fonction d'absorber le rayonnement infrarouge que l'on souhaite détecter, et doit être séparée du corps du détecteur par une couche électriquement isolante. Il s'avère donc d'une complexité élevée pour sa réalisation.

Par ailleurs, la technologie définie dans ce document optimise naturellement les lignes de courant, donc le niveau de bruit basse fréquence, puisque l'on s'en tient au cas où les électrodes sont rejetées au niveau de deux arêtes opposées du détecteur élémentaire, en revanche, cette disposition particulière ne peut s'appliquer qu'à des matériaux de très faible résistivité, et typiquement les oxydes de vanadium, sans quoi la résistance électrique de la membrane serait trop élevée pour une excitation correcte par le circuit de lecture, et en pratique est inapplicable au silicium amorphe et aux matériaux apparentés.

Les documents US 5760398 et WO 2002 088 648 décrivent d'autres dispositifs, à base de grilles.

## EXPOSE DE L'INVENTION

L'objectif recherché par la présente invention réside dans la maximalisation de la surface utile du matériau bolométrique (maximalisation du produit W.L) quelle que soit la résistivité du matériau bolométrique, sans que les performances du détecteur en résultant ne soient affectées par le bruit excédentaire lié notamment aux effets de pointe inhérents à la configuration inter-digitée des électrodes ou parties conductrices (5).

Selon l'invention, le détecteur bolométrique comprend les caractéristiques énoncées dans la revendication 1.

Le détecteur bolométrique conforme à l'invention se caractérise en ce que les éléments conducteurs se répartissent selon deux réseaux croisés et superposés de lignes conductrices, le premier des deux réseaux comprenant tous lesdits premiers éléments conducteurs, la superposition pouvant être totale ou partielle.

Par croisement et superposition, il faut entendre, au sens de la présente invention, le fait que lesdites lignes conductrices du premier réseau sont concourantes avec celles constitutives du second réseau dans leur projection respective dans le plan contenant la partie sensible.

Ledit premier réseau comprend en outre des seconds éléments conducteurs ; cependant, deux au moins des lignes conductrices qui le constituent sont en contact avec le matériau sensible constitutif de la partie sensible afin de constituer les électrodes. Ce contact intervient avantageusement selon toute leur longueur, optimisant en cela les performances du détecteur.

Selon les différentes configurations envisageables de l'invention, il est possible qu'il n'existe aucun contact électrique entre les deux réseaux. Cependant, dans le cas de la mise en oeuvre d'un matériau sensible à résistivité élevée, deux au moins des lignes du second réseau sont en contact alterné avec lesdites lignes particulières dudit premier réseau en contact avec le matériau sensible constitutif de la partie sensible.

Ce faisant, on diminue de manière significative les surfaces inactives du détecteur de l'invention au bénéfice des surfaces utiles, tout en diminuant le bruit excédentaire lié aux effets de resserrement des lignes de courant variable en fonction de la configuration de détail des éléments conducteurs et du matériau bolométrique mis en oeuvre.

Selon l'invention, les lignes respectives de chacun des deux réseaux sont essentiellement rectilignes et parallèles entre elles, les lignes conductrices du premier réseau étant typiquement perpendiculaires à celles constitutives du second réseau.

En outre, le pas séparant chacune des lignes de l'un des réseaux est identique ou différent du pas séparant les lignes de l'autre réseau.

Le contact entre deux lignes de deux réseaux différents est réalisé par ouverture au sein d'une couche diélectrique intercalée entre la couche sensible constitutive de la partie sensible et le premier niveau de lignes conductrices constitutives du premier réseau.

## BREVE DESCRIPTION DES FIGURES

La manière dont l'invention peut être réalisée et les avantages qui en découlent ressortiront mieux des exemples de réalisation qui suivent, donnés à titre indicatif et non limitatif à l'appui des figures annexées.

La figure 1 est comme déjà dit, une illustration en plan d'un détecteur bolométrique élémentaire conforme à l'art antérieur, dont la figure 2 est une vue en section, selon la ligne A-A.

La figure 3 est une représentation schématique en plan d'un détecteur conforme à la présente invention, dont la figure 4 est une vue en section réalisée selon la ligne B - B.

La figure 5 est une vue de détail d'une partie de ladite vue en section de la figure 4.

Les figures 6 et 7 sont également des vues de détail, mais d'autres formes de réalisation de l'invention.

## EXPOSE DETAILLE DE L'INVENTION

L'invention concerne donc tout d'abord un détecteur bolométrique élémentaire, et plus particulièrement, la configuration et la mise en place de lignes conductrice au niveau de sa partie sensible, elle-même constituant le coeur de la membrane. Ces lignes conductrices ont selon le cas fonction d'électrodes, c'est à dire d'acheminement du courant électrique du circuit de lecture vers la partie sensible, et d'absorbeur du rayonnement infrarouge à détecter, ou limitativement la seule fonction d'absorbeur.

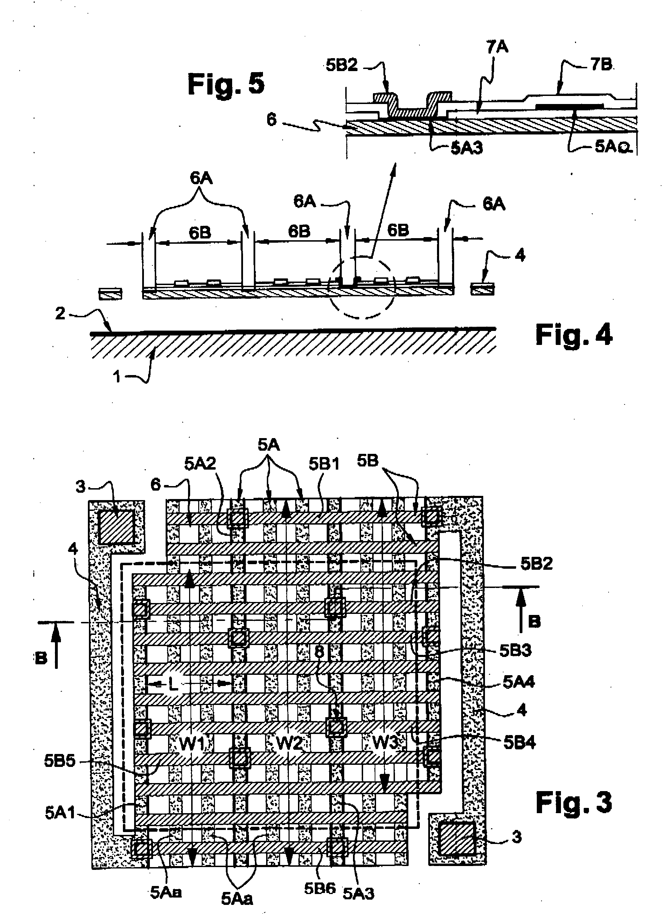

La figure 3 représente un mode typique de réalisation de la membrane bolométrique conforme à l'invention. Les divers éléments en commun avec la figure 1 portent la même référence numérique.

Selon une caractéristique fondamentale de l'invention, ladite membrane reçoit deux réseaux distincts de lignes conductrices (5).

Le premier réseau est constitué d'une série de lignes conductrices (5A), essentiellement rectilignes et parallèles entre elles. Dans l'exemple décrit, quatre (5A1, 5A2, 5A3 et 5A4) de ces lignes sont en contact avec le matériau bolométrique (6) constitutif de la membrane. Ce contact intervient en outre essentiellement sur toute la longueur desdites lignes. Cependant, afin de permettre le fonctionnement du détecteur selon l'invention, il suffirait que deux seulement de ces lignes soient effectivement en contact avec ledit matériau bolométrique. Dans les faits, et afin d'optimiser l'aire (W.L) mentionnée précédemment en relation avec l'évocation du problème technique qu'entend résoudre la présente invention, les lignes conductrices extrêmes (5A1) et (5A4) sont effectivement en contact avec le matériau bolométrique (6). En effet, une autre configuration induirait la perte de surface située au delà desdites lignes conductrices extrêmes, allant très exactement à l'encontre du résultat recherché.

On peut ainsi observer, dans l'exemple décrit en relation avec la figure 3, que le réseau (5A) n'est en contact avec le matériau bolométrique (6) que selon une ligne sur trois, dont en particulier une première (5A1) et une dernière (5A4) lignes en contact avec la couche (6) le long des deux arêtes opposées.

Le second réseau est également constitué d'une série de lignes conductrices (5B), essentiellement rectilignes et parallèles entre elles, et en outre typiquement orientées de manière orthogonale aux lignes conductrices (5A) constitutives dudit premier réseau. Sur la figure 3, on peut en effet observer que la projection dans le plan contenant la membrane des lignes conductrices constitutives des deux réseaux sont perpendiculaires entre elles.

Dans l'exemple décrit, trois couples de ces lignes conductrices, respectivement (5B1, 5B2), (5B3, 5B4) et (5B5, 5B6) sont en contact électrique alterné avec les lignes particulières (5A1, 5A2, 5A3 et 5A4) du premier réseau, c'est à dire avec les lignes conductrices du premier réseau en contact avec le matériau bolométrique (6). Ainsi, au sein de la figure 3, le second réseau (5B) ne contacte les lignes conductrices particulières (5A1, 5A2, 5A3 et 5A4) dudit premier réseau (5A) que selon une ligne sur deux (en moyenne).

Cette configuration particulière typique permet d'obtenir une résistance suffisamment faible à partir d'un matériau sensible (6) à forte résistivité. En effet, selon cette configuration particulière, on dispose d'un nombre suffisant de contacts électriques avec les lignes du réseau (5A), lesdits contacts étant espacés d'une distance L régulière afin d'aboutir à une densité de courant uniforme. Ces contacts sont portés de manière alternée aux potentiels haut et bas (lors de la lecture) à l'aide des connexions réalisées à l'aide des lignes (au moins deux) du second réseau (5B).

Ce faisant, on réaliser un « peigne » interdigité, dont la résistance est proportionnelle à L/(n-1), où n désigne le nombre de lignes conductrices du réseau (5A) en contact avec le matériau sensible (6). Ainsi, avec un pas p, et en simplifiant à l'extrême, on peut dessiner p/L lignes conductrices (5A) au contact du matériau sensible (6), avec une résistance :

$$R \approx p \, / \, n(n\text{-}1)$$

Ainsi, les lignes conductrices (5A1) et (5A3) sont chacune en contact électrique avec les lignes conductrices (5B2, 5B4 et 5B6), alors que les lignes conductrices (5A2) et (5A4) sont quant à elles chacune en contact électrique avec les lignes conductrices (5B1, 5B3 et 5B5). Cependant, et là encore, afin de permettre le fonctionnement du détecteur selon l'invention, il suffirait que deux seulement des ces lignes (5B) soient effectivement en contact alterné avec lesdites lignes conductrices particulières (5A1, 5A2, 5A3 et 5A4) dudit premier réseau.

Cette alternance permet d'éviter tout court-circuit entre les électrodes de la membrane.

L'ensemble de ces lignes particulières, qu'elles appartiennent au premier ou au second réseau, remplissent donc la fonction d'électrode et d'absorbeur. En revanche, toutes les autres lignes se cantonnent limitativement dans la fonction d'absorbeur du rayonnement.

Dans la configuration particulière où seulement deux lignes conductrices du réseau (5A) sont en contact avec le matériau sensible (6), configuration suffisante pour constituer un bolomètre élémentaire fonctionnel, il n'est pas nécessaire que soient réalisés des contacts avec des lignes conductrices du réseau (5B), ces dernières jouant alors limitativement le rôle d'absorbeur du rayonnement.

Dans une large mesure, et contrairement aux contraintes des détecteurs de l'état antérieur de la technique, la densité (c'est à dire le pas) des lignes conductrices de chaque réseau est arbitraire, sans affecter les performances du détecteur. Ce faisant, la possibilité de disposer de deux réseaux croisés indépendants de lignes conductrices, de pas relativement libre, autorise naturellement la constitution d'un grand nombre de dispositions et combinaisons pour la définition de la géométrie des lignes de courant à l'intérieur du matériau bolométrique (6), donc de la résistance R globale du détecteur.

De par cette souplesse de configuration de la répartition des lignes conductrices, on conçoit que l'homme du métier peut parvenir aisément à la valeur de la résistance R globale souhaitée du détecteur en fonction du matériau bolométrique (6) mis en oeuvre, en jouant sur le choix judicieux de l'espace entre les lignes conductrices (donc leur pas), et en particulier l'espace entre lignes conductrices du réseau (5A) en contact avec ledit matériau bolométrique, et la distribution des connexions entre les deux réseaux. Il convient de souligner que l'obtention d'un tel résultat s'affranchit de tout recours au repliements ou inter-digitations des électrodes en contact avec le matériau bolométrique, tels que préconisés par l'état antérieur de la technique, dont on a rappelé qu'ils étaient source de bruit excédentaire lié aux effets de pointe. Au surplus, la mise en oeuvre de l'invention permet d'exploiter l'essentiel de la surface utile du matériau bolométrique (maximisation du produit W.L). Ce faisant, l'invention procure le double avantage d'une grande souplesse de conception et d'une performance optimale.

D'un point de vue pratique, la formation d'un contact entre les lignes conductrices particulières (5A1, 5A2, 5A3 et 5A4) du premier réseau et le matériau bolométrique (6) est typiquement obtenue à l'aide d'ouvertures essentiellement linéaires dans une première couche diélectrique d'intercalation (7A), revêtant la couche (6) de matériau bolométrique, permettant l'isolation électrique entre cette dernière et les lignes conductrices (5Aa) dudit premier réseau, remplissant limitativement la fonction d'absorbeur du rayonnement.

Cependant, un mode particulier de réalisation de l'invention peut consister à conférer à l'intégralité des lignes conductrices (5A) dudit premier réseau la double fonction d'électrode et d'absorbeur du rayonnement infrarouge. Dans cette hypothèse, l'ensemble des lignes conductrices (5A) dudit premier réseau est en contact avec la couche de matériau bolométrique (6). Ce faisant, la couche (7A) de matériau diélectrique devient superflue. Dans cette configuration, l'intégralité desdites lignes conductrices du réseau (5A) peut ne pas être connectée au réseau (5B). Dans ce cas, les lignes conductrices du réseau (5A) non connectées à des lignes du réseau (5B) font fonction d'électrodes à potentiel flottant.

La formation d'un contact électrique entre les lignes conductrices particulières (5A1, 5A2, 5A3 et 5A4) du premier réseau et certaines lignes conductrices du second réseau, conformément à ce qui précède, est typiquement obtenue à l'aide d'ouvertures (8) essentiellement ponctuelles (il convient d'entendre par ce terme « de très petites dimensions devant les dimensions de la membrane ») pratiquées au sein d'une seconde couche de matériau diélectrique (7B), intercalée entre les lignes conductrices faisant limitativement fonction d'absorbeur (5Aa) dudit premier réseau et les lignes conductrices (5B) dudit second réseau (voir figure 5). Ces ouvertures (8) sont disposées à certains croisements particuliers desdites lignes conductrices, conformément à la description qui précède.

La figure 3 représente l'une des configurations particulières possibles selon l'invention. Celle-ci permet ainsi d'obtenir une résistance globale R environ deux fois plus élevée que celle que l'on obtiendrait selon la configuration de la figure 1, bien évidemment en mettant en oeuvre la même couche de matériau bolométrique (6).

D'autres configurations des deux réseaux permettraient de conserver une résistance R comparable. Cependant, la configuration proposée au sein de la figure 3 permet d'exposer simplement tous les caractères intéressants de l'invention sans qu'il soit besoin d'expliciter d'autres configurations, parfaitement à la portée de l'homme du métier une fois le principe général sous-tendant l'invention compris.

La disposition des points de contact (8) entre les deux réseaux de lignes conductrices explicite le principe introduit plus haut de contact alterné, afin de générer des équipotentielles régulièrement alternées parmi les lignes conductrices du réseau (5A). Il serait cependant possible de contacter les lignes dudit réseau (5A) à l'aide de toutes les lignes du réseau (5B), comme il serait également possible de ne les contacter qu'à l'aide d'une seule ligne du réseau (5B) pour chaque groupe équipotentiel, si cela produisait une résistance R d'accès acceptable. De fait, la densité des contacts entre les deux réseaux conducteurs (5A) et (5B) est dictée essentiellement par la résistance d'accès éventuellement excessive que provoquerait une densité de contacts trop faible.

Il peut également être souligné un avantage induit de la configuration préconisée de la présente invention. Ainsi, de par la mise en oeuvre de deux réseaux ponctuellement interconnectés, et notamment en raison de la distribution des contacts selon au moins deux lignes (5B) entre les deux réseaux, on dispose d'une redondance de connectique qui permet d'améliorer sensiblement la probabilité de distribuer correctement les potentiels, en évitant l'effet périlleux d'un contact unique entre deux lignes, éventuellement mal formé.

Un cas tout à fait particulier est à considérer, où seules les lignes extrêmes (5A1) et (5A4) du réseau (5A) sont en contact avec la couche de matériau bolométrique (6). Dans ce cas il n'y a pas lieu de former de contacts électriques (8) entre les deux réseaux (5A) et (5B). En effet, de tels contacts produiraient un court-circuit de la structure. La résistance résultante présenterait dans cette configuration particulière la valeur maximale possible dans la direction considérée de la membrane, orthogonale au réseau (5A), par disparition de l'alternance des potentiels, mais la structure serait cependant encore optimisée en termes de niveau de bruit basse fréquence et d'absorption optique.

On notera également que d'autres lignes internes (entre ces lignes extrêmes) du réseau (5A) peuvent elles aussi être en contact avec la couche de matériau bolométrique (6), sans modifier sensiblement la constitution des lignes de courant, et donc la fonctionnalité ou la qualité du détecteur, à la surface près consommée par les contacts additionnels vers ladite couche (6). Comme déjà dit, dans l'hypothèse où toutes les lignes du réseau (5A) sont en contact avec la couche (6), il convient naturellement d'éliminer de manière préférentielle la couche (7A) devenue inutile.

La configuration préconisée par l'invention permet de simplifier de manière sensible la réalisation d'un tel détecteur. En effet, celle-ci permet par exemple d'étendre les lignes extrêmes (5A1) et (5A4) du réseau (5A) sur les bras (4), de manière continue vers les piliers conducteurs (3).

En outre, l'invention permet de conserver le matériau bolométrique (6) au niveau des bras (4), simplifiant également le procédé de réalisation d'un tel détecteur. Certes, on évite en général la conservation dudit matériau à ce niveau pour améliorer la résistance thermique du détecteur, mais ceci n'est pas l'objet de l'invention.

D'autres modes de réalisation des amenées de courant électrique aux « bornes » de la membrane sensible sont imaginables sans sortir du cadre de l'invention. Ainsi, une autre réalisation particulière peut être obtenue par exemple en prolongeant non pas le réseau (5A), mais plutôt le réseau (5B) sur les piliers (3). Le choix de la couche conductrice particulière retenue à cette fin est dicté d'une part par les qualités de conduction électrique et thermique du matériau utilisé pour chacun des réseaux, qui peut être différent, et d'autre part par la commodité technologique de l'assemblage général de la structure.

Il convient en effet de noter, que selon l'invention, le nombre de lignes conductrices comme les caractères géométriques (largeur, épaisseur, forme de détail) des deux réseaux conducteurs ne se limitent en rien à l'exemple décrit, qui ne remplit qu'une finalité démonstrative.

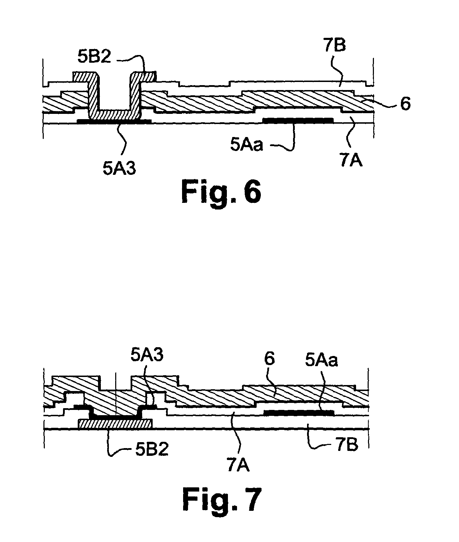

D'autres configurations des réseaux sont également envisageables au sens de l'invention. Ainsi, il est possible de disposer le réseau (5A) en dessous de la couche de matériau bolométrique (6). Dans ce cas, la couche diélectrique optionnelle (7A) est disposée entre ledit réseau et la couche (6). Cette couche diélectrique (7A) est enlevée au droit des lignes du réseau (5A) destinées par le concepteur, à entrer en contact avec le matériau bolométrique (6). Les points de contact entre les deux réseaux (5A) et (5B) sont obtenus par la réalisation d'ouvertures traversantes ménagées au sein de la couche dudit matériau (6) et de la couche de diélectrique (7B), revêtant la surface supérieure de ladite couche de matériau bolométrique (6). Le réseau (5B) est alors formé au dessus de l'ensemble. Il est cependant possible d'inverser les rôles des réseaux (5A) et (5B), c'est-à-dire de pratiquer les contacts linéaires vers le matériau bolométrique (6) à l'aide du réseau supérieur. C'est configuration est matérialisée sur la figure 6.

Il est aussi possible de retourner complètement la structure décrite sur la figure 3 en disposant les deux réseaux (5A) et (5B) en dessous de la couche de matériau bolométrique (6), tel que matérialisé sur la figure 7. Cette configuration particulière s'avère avantageuse dès lors que l'on souhaite, pour des raisons de procédés de fabrication, déposer le matériau sensible (6) le plus tard possible dans le processus d'assemblage. Ce souhait peut notamment résulter de problèmes de compatibilité du matériau sensible avec les procédés de définition des autres matériaux, ou d'accessibilité directe sur toute la surface du matériau sensible une fois le dispositif terminé.

Toutes ces variantes relèvent cependant du même principe d'exploitation de l'invention.

Il va être précisé ci-après les critères d'optimisation fonctionnelle des détecteurs réalisés selon l'invention.

On considère le cas non limitatif mais typique où la membrane du microbolomètre est uniformément « tapissée », jusqu'à ses limites ou arêtes, de deux réseaux orthogonaux (5A) et (5B) constitués chacun de lignes conductrices parallèles et régulièrement espacées, et de résistance linéaire identique à l'intérieur de chaque réseau. Cette configuration conduit à l'efficacité optimale d'absorption. L'absorption du rayonnement électromagnétique incident est optimisée lorsque la résistance électrique globale R, vue entre deux arêtes opposées de la membrane, est voisine de 380 Ohms. Cette valeur s'entend pour une membrane suspendue entre 1,5 μm et 3 μm au dessus d'un réflecteur, et est bien connue de l'homme du métier pour réaliser un absorbeur électromagnétique à partir d'une couche conductrice continue. Chacun des réseaux (5A) et (5B) doit être tel que ce critère soit sinon respecté, du moins approché.

Cette donnée est valable pour une membrane de forme extérieure carrée. Toute autre forme de membrane peut cependant être optimisée, si tout tracé suffisamment grand (pour contenir au moins deux segments de lignes conductrices de chacun des réseaux (5A, 5B) inscrit dans la membrane répond lui-même à ce critère. Un tel tracé est représenté par un contour pointillé sur la figure 3.

Une autre manière d'évaluer l'optimisation du détecteur est de construire un carré «circonscrit» en repoussant localement les limites de la membrane (avec extension concomitante des réseaux) jusqu'à obtenir un carré qui réponde au critère énoncé ci-dessus.

Par exemple, une membrane carrée peut être tapissée d'un réseau de dix lignes conductrices parallèles, présentant chacune une résistance de 3.800 Ohms dans une direction, et d'un réseau de cinq lignes conductrices parallèles, présentant chacune une résistance de 1.900 Ohms, selon la direction orthogonale. En effet, la résistance « vue » entre deux arêtes opposées est égale à 1/n fois la résistance d'une seule ligne conductrice orthogonale à ces arêtes, pour n lignes conductrices en parallèle.

Ce critère représente un optimum non critique, car en pratique une membrane carrée, dont la résistance vue entre deux arêtes opposées serait de 300 ou 500 Ohms selon chaque direction, ne sera que marginalement moins efficace. L'homme du métier sait en effet que l'absorption ne varie que lentement en fonction de la résistance au voisinage de l'optimum précité.

Dans l'objectif d'une optimisation du détecteur de l'invention, ce critère général est avantageusement complété par un critère particulier reposant sur le pas de chacun des réseaux (5A) et (5B). Ainsi, et de préférence, le pas ne doit pas dépasser la moitié de la longueur d'onde du rayonnement moyen à détecter. Ce faisant, pour un détecteur destiné à capter les rayonnements entre 8 et 14 $\mu$m, on utilisera avantageusement un pas inférieur à 6 $\mu$m pour chaque réseau de lignes conductrices. Des pas de valeurs plus élevées conduisent notamment à des phénomènes de diffraction qui peuvent nuire à la qualité de l'absorption électromagnétique.

En respectant ces critères, on aboutit typiquement à un niveau d'absorption supérieur à 90% du rayonnement incident dans le spectre de détection précisé.

Il va maintenant être décrit un mode de réalisation du détecteur conforme à l'invention.

Les rétines matricielles de microbolomètres sont habituellement obtenues à l'aide de procédés traditionnels connus de l'homme du métier, par dépôts et gravures successives de diverses couches constitutives du produit fini : diélectriques, matériau bolométrique, matériaux métalliques pour les zones équipotentielles (telles que les amenées de courant et électrodes).

Ces différents dépôts sont réalisés en surface supérieure d'une couche de structure, dite couche « sacrificielle », en ce sens qu'elle est éliminée en fin de processus pour laisser la structure du bolomètre, et plus particulièrement la membrane, soutenue uniquement par ses organes d'isolation thermique (les bras (4) notamment).

Une rétine d'imagerie est obtenue par la juxtaposition matricielle de membranes unitaires, telles que représentées sur les figures 1 ou 3, les techniques microélectroniques se prêtant naturellement à ce genre de construction, ainsi qu'à la réalisation simultanée d'un grand nombre de rétines sur un substrat unique.

Les étapes qui suivent concernent plus spécifiquement la réalisation du dispositif de détection selon l'invention. Cette description s'applique en relation avec un assemblage particulier. Pour autant, elle ne saurait en aucun cas constituer une quelconque limitation de la portée effective de l'invention, notamment en ce qui concerne les variantes de construction que peut facilement imaginer l'homme du métier, telles que par exemple suggérées dans l'exposé précédent en relation avec le détecteur proprement dit. Ainsi, toute inversion dans l'ordre des couches, toute disposition de détail des diverses parties, ou de procédé de réalisation particulier, entrent dans le champ de l'invention.

Les opérations décrites ci-après sont directement liées à la réalisation d'un détecteur conforme à la figure 3.

La première étape consiste à déposer une couche dite « sacrificielle » en surface du substrat (habituellement réalisé en silicium) comportant le circuit de lecture. Cette couche sacrificielle peut typiquement être constituée de polyimide ou tout matériau organique ou minéral pouvant supporter les conditions opératoires de la suite du procédé, et susceptible d'être éliminé sélectivement une fois la construction terminée. Avantageusement, selon un arrangement bien connu, une couche métallique réfléchissante (2) (en aluminium par exemple), est préalablement déposée en surface du substrat (1), et gravée localement par les techniques adéquates connues, afin d'optimiser le comportement spectral du détecteur. Dans le cas d'espèce, la couche sacrificielle est ajustée entre 1,5 et 3 $\mu$m d'épaisseur, s'il s'agit d'optimiser l'absorption d'un rayonnement de spectre de longueur d'onde compris entre 8 et 14 $\mu$m.

Une couche de matériau bolométrique (6) est ensuite déposée en surface de la couche sacrificielle, selon une épaisseur typiquement comprise entre 50 et 500 nanomètres, et ce, à l'aide des techniques usuelles. La construction décrite ici est particulièrement adaptée au silicium amorphe ou aux matériaux apparentés du type $Si_xGeyC_{(1-x-y)}$.

Une première couche de matériau diélectrique (7A), typiquement de l'oxyde ou du nitrure de silicium, d'épaisseur typiquement comprise entre 10 et 50 nanomètres, est ensuite déposée en surface de la couche de matériau bolométrique (6), par exemple par un procédé de dépôt assisté par plasma (PECVD selon l'expression anglo-saxonne consacrée).

A l'aide d'un masque lithographique et d'un procédé de gravure adaptés traditionnels, cette couche de matériau diélectrique (7A) est ouverte (gravée), par exemple selon le schéma de la figure 3, c'est-à-dire selon des lignes parallèles très étroites. Cependant, la largeur de ces ouvertures n'est typiquement pas inférieure à l'épaisseur du matériau (6), et par exemple s'étend en largeur sur une distance comprise entre 0,2 et 2 $\mu$m. L'espacement entre ces ouvertures est par exemple compris entre 5 et 50 $\mu$m.

La première couche de matériau conducteur électrique (5A) est ensuite déposée selon les techniques connues adaptées à ce type de couches. N'importe quel métal, de préférence usuel en microélectronique, peut être utilisé, tel que l'aluminium, le titane, le nitrure de titane. A l'aide d'un second masque lithographique, le premier réseau (5A) de lignes conductrices est défini par gravure traditionnelle. Certaines des lignes constitutives de ce réseau (5A) sont disposées au droit des ouvertures ménagées dans la couche de matériau diélectrique (7A) sous-jacent précédemment réalisées. Les autres lignes sont laissées «flottantes», c'est à dire isolées du matériau bolométrique (6) par la couche diélectrique (7A).

L'épaisseur e et la résistivité (Rho) de la couche (5A), c'est-à-dire finalement la résistance de couche définie par Rho/e (pour utiliser les grandeurs usuelles de l'homme du métier) sont choisies en fonction des dimensions finales des lignes conductrices du réseau (5A), de manière à satisfaire le critère général précisé précédemment. Par exemple, la portion de membrane inscrite dans le carré en pointillés comporte neuf lignes conductrices, dont chacune doit présenter une résistance de 3.400 Ohms environ entre les points définis par l'intersection des lignes avec les arêtes « horizontales » du carré matérialisé en pointillés sur la figure 3. Lorsque l'on considère les neuf lignes en parallèle, on obtient environ 380 Ohms entre les deux arêtes opposées « horizontales » dudit carré en pointillés.

Si la couche conductrice (5A) présente une résistance de couche de 100 Ohms/carré, obtenue par exemple avec 10 nanomètres de nitrure de titane à 100 micro-Ohm.cm de résistivité, le rapport de la longueur (interne au carré pointillé) sur la largeur doit être voisin de 34. Si l'on considère que la figure 3 représente un bolomètre de 50$\mu$m d'arête hors tout, le carré pointillé inscrit ferait environ 34 $\mu$m d'arête et la largeur des lignes (5A) doit donc être établie à 1$\mu$m environ, lesdites lignes (5A) étant répétées selon un pas de préférence régulier de 3,8 $\mu$m environ, et ce afin de retrouver les neuf lignes et les neuf espaces séparant lesdites lignes inscrits dans le carré pointillé.

Bien évidemment, d'autres combinaisons paramétriques en termes de résistance de couche, densité et largeur des lignes sont susceptibles de conduire à un résultat satisfaisant le critère général précité.

Ainsi que déjà indiqué, il est possible de prévoir une configuration dans laquelle toutes les lignes conductrices du premier réseau (5A) sont en contact avec le matériau bolométrique (6). Ce cas particulier est avantageux dans le sens où il n'est plus nécessaire de mettre en oeuvre la couche en matériau diélectrique (7A) et les techniques de définition (lithographie et gravure) associés. Il en résulte dès lors un gain de complexité sensible. Cependant, la surface totale des lignes (5A) en contact avec la couche (6) doit être considérée comme perdue pour l'optimisation du dispositif, car la surface de ces lignes (5A) équivaut aux surfaces (6A) de la figure 3. Il est donc avantageux de limiter la proportion des lignes en contact avec le matériau bolométrique (6) au strict nécessaire pour obtenir la résistance globale espérée pour l'ensemble de la membrane, une fois l'assemblage terminé. De la même manière, la largeur des zones de contact, en l'espèce des ouvertures ménagées au sein de la couche diélectrique (7A) est limitée au minimum pratique pour la même raison.

La couche (5A) est laissée intacte au droit des structures conductrices (4) de soutien (à gauche et à droite sur la figure 3).

Les supports conducteurs ou piliers (3) sont alors formés grâce à l'application d'un nouveau masque lithographique, destiné à protéger l'ensemble de la structure, à l'exception d'ouvertures de petites dimensions, par exemple de un à quelques $\mu$m de côté. Ces ouvertures sont ensuite gravées à travers les couches superficielles dans l'ordre (matériau conducteur (5A), matériau diélectrique (7A), matériau bolométrique (6)), puis à travers la couche sacrificielle, jusqu'à aboutir à la surface des contacts préalablement réalisés en surface du circuit de lecture (1). On dépose ensuite une couche relativement épaisse, par exemple comprise entre 0,2 et 2 $\mu$m d'un métal choisi parmi les matériaux traditionnels pour cet usage, tels l'aluminium et alliages, le titane, le nitrure de titane, le tungstène ou siliciure de tungstène, ou un assemblage de ces divers matériaux, de manière non limitative.

Un masque lithographique est ensuite appliqué pour conserver ce métal au voisinage immédiat des ouvertures précédemment pratiquées, et on élimine par gravure le ou les métaux précédemment déposés selon des procédés classiques, sur le reste de la surface. La gravure est arrêtée de manière sélective lorsque la couche (5A) est découverte. Il peut être avantageux d'inverser l'ordre des deux derniers masques lithographiques et gravures associées.

Une seconde couche d'un matériau diélectrique (7B), de nature et d'épaisseur typiquement identique à la première (7A) est ensuite déposée, puis gravée à l'aide d'un nouveau masque lithographique, selon les ouvertures localisées (8) qui débouchent sur les lignes conductrices (5A1, 5A2, 5A3, 5A4) du réseau (5A) en contact avec le matériau bolométrique (6).

Une seconde couche conductrice électrique (5B) est alors déposée, et définie selon un réseau essentiellement orthogonal au premier (5A), à l'aide d'un niveau lithographique adapté.

Les mêmes matériaux que pour le premier réseau peuvent être utilisés. De nouveau, l'épaisseur et la résistivité de cette couche (5B), et donc sa « résistance de couche » sont choisies en fonction des dimensions finales des lignes conductrices de ce second réseau, de manière à satisfaire le critère général précédemment évoqué. Par exemple, la portion de membrane inscrite dans le carré en pointillés, supposé mesurer 34 $\mu$m d'arête, comporte aussi neuf lignes conductrices (5B), dans ce cas particulier de construction, dont chacune doit présenter une résistance de 3.400 Ohms environ entre les points définis par les deux arêtes « verticales » du carré pointillés. Si l'on entend définir la largeur de chaque ligne à 2 μm environ (et donc les espaces à 1,8 μm), il faut utiliser pour ce second réseau (5B) une couche de métal de 200 Ohm/carré, obtenue par exemple avec 10 nanomètres de nitrure de titane de résistivité voisine de 200 micro-Ohm.cm. Les neuf lignes en parallèle équivalent alors à environ 380 Ohm vus entre les deux arêtes « verticales » du carré pointillés, et ce, conformément au critère d'optimisation mentionné précédemment.

A l'aide d'un dernier niveau lithographique, le pourtour de la membrane, ainsi que des structures de soutien (4) et des piliers (3) sont découpés par gravure non sélective de tous les matériaux constitutifs de la membrane : (5B) éventuellement, (7B), (5A), (7A), (6), jusqu'à pénétrer en surface de la couche sacrificielle. Les techniques de gravure de préférence «sèches» les mieux adaptées à cette opération pour l'ensemble des matériaux évoqués sont bien connues de l'homme du métier.

Il convient alors d'éliminer la couche sacrificielle par combustion sous plasma d'oxygène par exemple, dans le cas habituel où ladite couche sacrificielle est de nature organique, et la membrane se retrouve suspendue au dessus du substrat (1) selon l'état final fonctionnel et optimisé prévu.

On observe ainsi, en comparant les configurations représentées sur les figures 1 et 3, et plus particulièrement au sein des vues en section correspondantes (figures 2 et 4), et notamment au niveau de la géométrie relative des surfaces (6A) et (6B) (dont seule la petite dimension est indiquée) que les surfaces inactives au sens des lignes de courant (6A) ont été sensiblement réduites, grâce à la mise en oeuvre de l'invention, au bénéfice des surfaces utiles (6B).

L'évaluation comparée des grandeurs caractéristiques W et L indiquées sur les figures 1 et 3, montre que l'exemple de configuration proposé selon l'invention améliore la distance L d'un facteur 2 environ, et la distance W de 10% environ. En effet, la largeur électrique W sur l'exemple de la figure 3 est sensiblement égale à la somme $W_1 + W_2 + W_3$. L'amélioration relative de performance résultante en termes de signal / bruit est donc voisine de 50%, ou alternativement, la résolution thermique est diminuée (améliorée) de 33%, ce qui est très significatif dans ce domaine.

Il convient également d'ajouter à ce gain, la disparition du bruit excédentaire lié aux effets de resserrement des lignes de courant, variables selon la configuration de détail et le matériau bolométrique mis en oeuvre. Il est raisonnable d'anticiper encore 10 à 15% d'amélioration supplémentaire du rapport signal / bruit, c'est à dire obtenir une résolution thermique diminuée de 40% environ par rapport à la technique du document EP-A-0 828 145.

On retiendra que le bénéfice de performances apporté par l'invention résulte de l'apport supplémentaire d'une grande souplesse de définition de la résistance électrique de la membrane, afin de l'ajuster aux exigences fonctionnelles du circuit de lecture, essentiellement sans compromis sur la performance finale. Ce caractère est typiquement absent des techniques antérieures enseignées dans les documents cités en préambule.

**Revendications**

**1.** Détecteur bolométrique d'un rayonnement électromagnétique, comprenant :

- un substrat dans lequel est formé un circuit de lecture (1), sur lequel est disposée une partie sensible ou membrane comportant :

• une ou plusieurs couches d'un matériau sensible (6), dont la résistivité varie avec la température ;
• un premier réseau (5A) de lignes parallèles conductrices de l'électricité, dont au moins deux sont en continuité électrique avec le circuit de lecture (1), et s'étendant selon l'essentiel de leur longueur au contact du matériau sensible (6),
• un second réseau (5B) de lignes parallèles conductrices de l'électricité, croisé et superposé au premier réseau (5A), les deux réseaux réalisant la fonction d'absorbeur du rayonnement électromagnétique ;
• une ou plusieurs couches de matériau diélectrique, au moins l'une (7B) isolant électriquement ledit matériau sensible (6) et ledit premier réseau (5A) dudit second réseau (5B) à l'exception de zones d'interconnexion de partie des lignes conductrices appartenant audit premier réseau (5A) avec partie des lignes conductrices dudit second réseau (5B) ;

- au moins une zone support (3) de la partie sensible, faisant fonction de positionnement de ladite partie sensible et de conducteur électrique en relation avec ledit circuit de lecture ;
- au moins une structure d'isolement thermique (4) reliant électriquement et mécaniquement chaque zone support (3) à la partie sensible.

**2.** Détecteur bolométrique d'un rayonnement électromagnétique selon la revendication 1, *caractérisé en ce que* chacun des réseaux (5A) et (5B) est superposé de manière totale à ladite couche de matériau sensible (6).

**3.** Détecteur bolométrique d'un rayonnement électromagnétique selon l'une des revendications 1 et 2, *caractérisé* **en ce que** ledit premier réseau (5A) comprend des éléments conducteurs de l'électricité à potentiel flottant, c'est-à-dire non en continuité électrique avec ledit circuit de lecture (1) et faisant limitativement fonction d'absorbeur du rayonnement électromagnétique.

4. Détecteur bolométrique d'un rayonnement électromagnétique selon l'une des revendications 1 à 3, *caractérisé* **en ce que** ledit second réseau (5B) comprend des éléments conducteurs de l'électricité à potentiel flottant, c'est-à-dire non en continuité électrique avec ledit circuit de lecture (1) et faisant limitativement fonction d'absorbeur du rayonnement électromagnétique.

5. Détecteur bolométrique d'un rayonnement électromagnétique selon l'une des revendications 1 à 4, *caractérisé* **en ce que** les lignes conductrices du premier réseau (5A) sont perpendiculaires à celles constitutives du second réseau (5B).

6. Détecteur bolométrique d'un rayonnement électromagnétique selon l'une des revendications 1 à 5, *caractérisé* **en ce que** les deux réseaux (5A) et (5B) de lignes conductrices sont positionnés au dessus de la surface supérieure de la couche de matériau sensible (6).

7. Détecteur bolométrique d'un rayonnement électromagnétique selon la revendication 6, *caractérisé* **:**

   • **en ce que** le premier réseau (5A) est électriquement isolé de la couche de matériau sensible (6) au moyen d'une première couche en un matériau diélectrique (7A), présentant localement des ouvertures situées chacune au droit de l'une des zones de contact entre les lignes conductrices particulières (5A1, 5A2, 5A3, 5A4) dudit premier réseau (5A) avec la couche de matériau sensible (6) ;
   • **en ce qu'**une seconde couche de matériau diélectrique (7B) est intercalée entre les lignes conductrices faisant limitativement fonction d'absorbeur (5Aa) dudit premier réseau (5A) et les lignes conductrices (5B) dudit second réseau ;
   • et **en ce que** le contact entre les lignes conductrices particulières (5A1, 5A2, 5A3 et 5A4) du premier réseau (5A) et certaines lignes conductrices du second réseau (5B) est réalisé au niveau d'ouvertures (8) pratiquées au sein de la seconde couche de matériau diélectrique (7B).

8. Détecteur bolométrique d'un rayonnement électromagnétique selon l'une des revendications 1 à 5, *caractérisé* **en ce que** l'un des dits réseaux (5A, 5B) est positionné en dessous de la couche de matériau sensible (6), et **en ce que** l'autre réseau est positionné en dessus de la couche de matériau sensible (6).

9. Détecteur bolométrique d'un rayonnement électromagnétique selon la revendication *8, caractérisé* :

   ■ en ce que le premier réseau (5A) est positionné en dessous de la couche en matériau sensible (6) et est électriquement isolé de cette dernière au moyen d'une première couche en un matériau diélectrique (7A), présentant localement des ouvertures au droit des zones de contact entre les lignes conductrices particulières (5A1, 5A2, 5A3, 5A4) dudit premier réseau (5A) avec la couche de matériau sensible (6) ;
   ■ en ce que le second réseau (5B) est positionné au dessus de la couche de matériau sensible (6) et est électriquement isolé de cette dernière au moyen d'une seconde couche en un matériau diélectrique (7B) ;
   ■ et en ce que les points de contact électrique entre les deux réseaux (5A) et (5B) sont obtenus par la réalisation d'ouvertures traversantes ménagées au sein de la couche dudit matériau (6) et de la seconde couche de matériau diélectrique (7B).

10. Détecteur bolométrique d'un rayonnement électromagnétique selon la revendication *8, caractérisé* :

   ■ en ce que le premier réseau (5A) est positionné au dessus de la couche de matériau sensible (6) et est électriquement isolé de cette dernière au moyen d'une première couche en un matériau diélectrique (7A), présentant localement des ouvertures au droit des zones de contact entre les lignes conductrices particulières (5A1, 5A2, 5A3, 5A4) dudit premier réseau (5A) avec la couche de matériau sensible (6) ;
   ■ en ce que le second réseau (5B) est positionné en dessous de la couche de matériau sensible (6) et est électriquement isolé de cette dernière au moyen d'une seconde couche en un matériau diélectrique (7B) ;
   ■ et en ce que les points de contact électrique entre les deux réseaux (5A) et (5B) sont obtenus par la réalisation d'ouvertures traversantes ménagées au sein de la couche dudit matériau (6) et de la seconde couche de matériau diélectrique (7B).

11. Détecteur bolométrique d'un rayonnement électromagnétique selon l'une des revendications 6 et 8, *caractérisé* **en ce que** l'intégralité des lignes conductrices (5A) dudit premier réseau est en contact avec la couche de matériau bolométrique (6).

12. Détecteur bolométrique d'un rayonnement électromagnétique selon la revendication 11, *caractérisé* :

■ en ce que ledit réseau (5A) est positionné au dessus de la couche de matériau sensible (6) ;
■ en ce qu'une couche de matériau diélectrique (7B) est intercalée entre les lignes conductrices dudit premier réseau (5A) et les lignes conductrices (5B) dudit second réseau ;
■ et en ce que le contact entre les lignes conductrices du premier réseau (5A) et certaines lignes conductrices du second réseau (5B) est réalisé au niveau d'ouvertures (8) pratiquées au sein de ladite couche de diélectrique (7B).

**13.** Détecteur bolométrique d'un rayonnement électromagnétique selon la revendication 11, *caractérisé :*

■ en ce que ledit réseau (5A) est positionné en dessous de la couche de matériau sensible (6) ;
■ en ce que le second réseau (5B) est positionné au dessus de la couche de matériau sensible (6) et est électriquement isolé de cette dernière au moyen d'un couche en un matériau diélectrique (7B) ;
■ et en ce que les points de contact électrique entre les deux réseaux (5A) et (5B) sont obtenus par la réalisation d'ouvertures traversantes ménagées au sein de la couche dudit matériau (6) et de la couche de matériau diélectrique (7B).

**14.** Dispositif de détection d'un rayonnement électromagnétique de type bolométrique, *caractérisé* **en ce qu'**il met en oeuvre un ou plusieurs détecteurs bolométriques selon l'une des revendications 1 à 13, et **en ce que** le ou les détecteurs sont solidarisés au circuit de lecture (1) au moyen d'une structure de type pilier (3).

**15.** Dispositif de détection d'un rayonnement électromagnétique de type bolométrique selon la revendication 14, *caractérisé* **en ce qu'**il présente une structure matricielle comportant au moins deux détecteurs bolométriques.

**16.** Procédé pour la réalisation d'un détecteur d'un rayonnement électromagnétique de type bolométrique selon la revendication 1, consistant, à partir d'un circuit de lecture, notamment réalisé sur un substrat en silicium :

• tout d'abord, à former une première couche auxiliaire sacrificielle sur ledit substrat silicium, destinée à être ôtée par tout moyen connu après réalisation du détecteur afin de découpler thermiquement le circuit de lecture (1) du module de détection ou partie sensible ;
• à former sur cette couche auxiliaire sacrificielle, une couche de matériau sensible bolométrique,
• à déposer sur cette couche sensible (6) une couche (7A) en un matériau diélectrique ;
• à réaliser à l'aide d'un masque lithographique et par gravure des ouvertures linéaires d'épaisseur limitée au sein de cette couche afin de constituer des zones de contact avec la couche de matériau sensible (6) ;
• à déposer une première couche de matériau conducteur électriquement ;
• à réaliser à l'aide d'un masque lithographique un premier réseau (5A) de lignes conductrices, dont certaines sont situées au droit des ouvertures ménagées dans la couche de matériau diélectrique (7A), et se trouvent de fait en contact électrique avec le matériau sensible (6) ;
• à réaliser les supports conducteurs ou piliers (3) par application d'un nouveau masque lithographique, destiné à protéger l'ensemble de la structure, à l'exception d'ouvertures de petites dimensions, lesdites ouvertures étant gravées à travers les couches superficielles dans l'ordre (matériau conducteur (5A), matériau diélectrique (7A), matériau bolométrique (6)), puis à travers la couche sacrificielle, jusqu'à aboutir à la surface des contacts préalablement réalisés en surface du circuit de lecture (1), puis par dépôt d'au moins une couche métallique, puis par gravure de cette ou de ces couches métalliques à l'aide d'un masque lithographique en dehors des piliers (3) ;
• à déposer sur le réseau (5A) une seconde couche de matériau diélectrique (7B) ;
• à réaliser à l'aide d'un masque lithographique et par gravure des ouvertures (8) au sein de ladite couche diélectrique (7B) et localisées au niveau des lignes conductrices du réseau (5A) en contact avec le matériau sensible (6) ;
• à déposer une seconde couche de matériau électriquement conducteur sur la couche de matériau diélectrique (7B) ;
• à réaliser à l'aide d'un masque lithographique un second réseau (5B) de lignes conductrices, orientées sensiblement orthogonalement par rapport aux lignes constitutives du premier réseau (5A) ;
• à définir à l'aide d'un masque lithographique et par gravure les bras de support (4) et le contour périphérique de la membrane ou partie sensible du détecteur ;
• et enfin, à éliminer la couche sacrificielle, de telle sorte que la membrane ou partie sensible se trouve suspendue au dessus du substrat (1).

**Claims**

**1.** A bolometric detector for electromagnetic radiation comprising:

- a substrate into which is formed a readout circuit (1), upon which is disposed a sensitive part or membrane comprising:

> • one or more layers of a sensitive material (6), the resistivity of which varies with temperature;
> • a first network (5A) of parallel conductive tracks, of which at least two are in electrical continuity with the readout circuit (1), and extending for most of their length in contact with the sensitive material (6) ;
> • a second network (5B) of parallel conductive tracks, crossed and superimposed to said first network (5A), both networks acting as electromagnetic radiation absorbers ;
> • one or several layers of dielectric material, at least one (7B) isolating electrically said sensitive material (6) and said first network (5A) from said second network (5B) except for connections zones of part of conductive tracks of said first network (5A) with part of conductive tracks of said second network (5B) ;

- at least one support area (3) for the sensitive part fulfilling the function of positioning said sensitive part and electric conductor in relation to said readout circuit;
- at least one thermal isolation structure (4) electrically and mechanically linking each support area (3) to the sensitive part.

2. A bolometric detector for electromagnetic radiation as claimed in claim 1, **characterised in that** each of the networks (5A) and (5B) is totally superimposed to the layer of sensitive material (6).

3. A bolometric detector for electromagnetic radiation as claimed in claim 1 or 2, **characterised in that** the first network (5A) comprises conductor elements at a floating potential, i.e. not in electrical continuity with said readout circuit (1) and acting limitatively as an electromagnetic radiation absorber.

4. A bolometric detector for electromagnetic radiation as claimed in claims 1 to 3, **characterised in that** the second network (5B) comprises conductor elements at a floating potential, i.e. not in electrical continuity with said readout circuit (1) and acting limitatively as an electromagnetic radiation absorber.

5. A bolometric detector for electromagnetic radiation as claimed in any of claims 1 to 4, **characterised in that** conductive tracks of the first network (5A) are perpendicular to those of the second network (5B).

6. A bolometric detector for electromagnetic radiation as claimed in claims 1 to 5, **characterised in that** both networks (5A) and (5B) of conductive tracks are positioned above the upper surface of the layer of sensitive material (6).

7. A bolometric detector for electromagnetic radiation as claimed in claim 6, **characterised:**

> • **in that** the first network (5A) is electrically isolated from the layer of sensitive material (6) by means of a first layer made of a dielectric material (7A) locally having openings opposite areas of contact between the special conductive tracks (5A1, 5A2, 5A3, 5A4) of said first network (5A) and the layer of sensitive material (6);
> • **in that** a second layer of dielectric material (7B) is interposed between the conductive tracks that act only as absorbers (5Aa) of said first network (5A) and the conductive tracks (5B) of said second network;
> • and **in that** contact between the special tracks (5A1, 5A2, 5A3 and 5A4) of first network (5A) and certain conductive tracks of the second network (5B) is obtained at openings (8) made in the second layer of dielectric material (7B).

8. A bolometric detector for electromagnetic radiation as claimed in any of claims 1 to 5, **characterised in that** one of said networks (5A, 5B) is positioned underneath the layer of sensitive material (6) and **in that** the other network is positioned above the layer of sensitive material (6).

9. A bolometric detector for electromagnetic radiation as claimed in claim 8, **characterised :**

> • **in that** the first network (5A) is positioned underneath the layer of sensitive material (6) and is electrically isolated from the latter by means of a first layer made of a dielectric material (7A) locally having openings opposite areas of contact between the special conductive tracks (5A1, 5A2, 5A3, 5A4) of said first network (5A) and the layer of sensitive material (6) ;
> • **in that** the second network (5B) is positioned above the layer of sensitive material (6) and is electrically isolated from the latter by means of a second layer made of a dielectric material (7B);
> • and **in that** the points of electrical contact between the two networks (5A) and (5B) are obtained by making through-openings in the layer of said material (6) and the second layer of dielectric material (7B).

10. A bolometric detector for electromagnetic radiation as claimed in claim 8, **characterised :**

> • **in that** the first network (5A) is positioned above the layer of sensitive material (6) and is electrically isolated from the latter by means of a first layer made of a dielectric material (7A) locally having openings opposite areas of contact between the special tracks (5A1, 5A2, 5A3, 5A4) of said first network (5A) and the layer of sensitive material (6);

• **in that** the second network (5B) is positioned underneath the layer of sensitive material (6) and is electrically isolated from the latter by means of a second layer made of a dielectric material (7B);

• and **in that** the points of electrical contact between the two networks (5A) and (5B) are obtained by making through-openings in the layer of said material (6) and the second layer of dielectric material (7B).

11. A bolometric detector for electromagnetic radiation as claimed in either claim 6 or 8, **characterised in that** all the conductive tracks (5A) of said first network are in contact with the layer of bolometric material (6).

12. A bolometric detector for electromagnetic radiation as claimed in claim 11, **characterised :**

• **in that** said network (5A) is positioned above the layer of sensitive material (6);

• **in that** a layer of dielectric material (7B) is interposed between the conductive tracks of said first network (5A) and the conductive tracks (5B) of said second network;

• and **in that** contact between the conductive tracks of the first network (5A) and certain conductive tracks of the second network (5B) is obtained at openings (8) made in said dielectric layer (7B).

13. A bolometric detector for electromagnetic radiation as claimed in claim 11, **characterised:**

• **in that** said network (5A) is positioned underneath the layer of sensitive material (6);

• **in that** the second network (5B) is positioned above the layer of sensitive material (6) and is electrically isolated from the latter by means of a layer made of a dielectric material (7B);

• and **in that** the points of electrical contact between the two networks (5A) and (5B) are obtained by making through-openings in the layer of said material (6) and the layer of dielectric material (7B).

14. A bolometric type infrared detection device, **characterised in that** it uses one or more bolometric detectors as claimed in claims 1 to 13 and **in that** the detector(s) is/are joined to readout circuit (1) by means of a post-type structure (3).

15. A bolometric type infrared detection device as claimed in claim 14, **characterised in that** it has an array structure comprising at least two bolometric detectors.

16. A method for producing a bolometric type infrared detector according to claim 1, involving, starting with a readout circuit, particularly one produced on a silicon substrate (1):

- firstly forming a first auxiliary sacrificial layer on said silicon substrate intended to be removed by any known means after producing the detector in order to thermally isolate the readout circuit (1) from the detection module or sensitive part;
- forming a layer of sensitive bolometric material on this auxiliary sacrificial layer;
- depositing a layer (7A) made of a dielectric material on this sensitive layer (6);
- using a lithographic mask and etching to produce linear openings of limited thickness in this layer in order to create areas of contact with the layer of sensitive material (6);
- depositing a first layer of electrically conductive material;
- using a lithographic mask to produce a first network (5A) of conductive tracks, some of which are situated opposite the openings made in the layer of dielectric material (7A) and because of this are in electrical contact with the sensitive material (6);
- producing conductive supports or posts (3) by applying a new lithographic mask intended to protect the entire structure apart from small-sized openings, said openings being etched through the superficial layers in the following order: conductive material (5A), dielectric material (7A), bolometric material (6), then through the sacrificial layer as far as the surface of contacts previously made on the surface of the readout circuit (1), then by depositing at least one metallic layer, then by etching this/these metallic layer(s) with the aid of a lithographic mask away from posts (3);
- depositing a second layer of dielectric material (7B) on network (5A);
- using a lithographic mask and etching to produce openings (8) in said dielectric layer (7B) localised on the conductive tracks of network (5A) that are in contact with the sensitive material (6);
- depositing a second layer of electrically conductive material on the layer of dielectric material (7B);
- using a lithographic mask to produce a second network (5B) of conductive tracks substantially oriented at right angles relative to the tracks that constitute the first network (5A);
- using a lithographic mask and etching to define support arms (4) and the peripheral contour of the membrane or sensitive part of the detector;
- and finally, eliminating the sacrificial layer so that the membrane or sensitive part is suspended above the substrate (1).

## Patentansprüche

1. Bolometrischer Detektor für eine elektromagnetische Strahlung, umfassend:

    - ein Substrat, in dem ein Lesekreis (1) gebildet ist, auf dem ein empfindlicher Abschnitt oder eine Membran angeordnet ist, umfassend:

        • eine oder mehrere Schichten (6) aus einem empfindlichen Werkstoff, dessen Resistivität sich mit der Temperatur ändert;
        • ein erstes Gitter (5A) von elektrisch leitenden parallelen Linien, von denen mindestens zwei mit dem Lesekreis (1) in elektrischer Kontinuität sind und die sich auf dem wesentlichen Teil ihrer Länge in Kontakt mit dem empfindlichen Werkstoff (6) erstrekken,
        • ein zweites Gitter (5B) von elektrisch leitenden parallelen Linien, das das erste Gitter (5A) kreuzt und diesem überlagert ist, wobei die beiden Gitter die Funktion eines Absorbers der elektromagnetischen Strahlung erfüllen;
        • eine oder mehrere Schichten aus einem dielektrischen Werkstoff, wobei mindestens eine (7B) den empfindlichen Werkstoff (6) und das erste Gitter (5A) von dem zweiten Gitter (5B) trennt, mit Ausnahme von Zonen der Verbindung von einem Abschnitt der zum ersten Gitter (5A) gehörenden leitenden Linien mit einem Abschnitt der leitenden Linien des zweiten Gitters (5B);

    - mindestens eine Zone (3) zum Tragen des empfindlichen Abschnitts, die zur Positionierung des empfindlichen Abschnitts und als elektrischer Leiter in Verbindung mit dem Lesekreis dient;
    - mindestens eine Struktur (4) zur Wärmeisolierung, die jede Tragzone (3) mit dem empfindlichen Abschnitt elektrisch und mechanisch verbindet.

2. Bolometrischer Detektor für eine elektromagnetische Strahlung nach Anspruch 1, **dadurch gekennzeichnet, dass** jedes der Gitter(5A) und (5B) vollständig der Schicht (6) aus empfindlichem Werkstoff überlagert ist.

3. Bolometrischer Detektor für eine elektromagnetische Strahlung nach einem der Ansprüche 1 und 2, **dadurch gekennzeichnet, dass** das erste Gitter (5A) elektrisch leitende Elemente mit schwimmendem Potential umfasst, d.h. die nicht in elektrischer Kontinuität mit dem Lesekreis (1) sind und in einschränkender Weise als Absorber für die elektromagnetische Strahlung dienen.

4. Bolometrischer Detektor für eine elektromagnetische Strahlung nach einem der Ansprüche 1 bis 3, **dadurch gekennzeichnet, dass** das zweite Gitter (5B) elektrisch leitende Elemente mit schwimmendem Potential umfasst, d.h. die nicht mit dem Lesekreis (1) in elektrischer Kontinuität sind und in einschränkender Weise als Absorber für die elektromagnetische Strahlung dienen.

5. Bolometrischer Detektor für eine elektromagnetische Strahlung nach einem der Ansprüche 1 bis 4, **dadurch gekennzeichnet, dass** die leitenden Linien des ersten Gitters (5A) zu denjenigen, die das zweite Gitter (5B) bilden, senkrecht sind.

6. Bolometrischer Detektor für eine elektromagnetische Strahlung nach einem der Ansprüche 1 bis 5, **dadurch gekennzeichnet, dass** die beiden Gitter (5A) und (5B) von leitenden Linien über der Oberseite der Schicht (6) aus empfindlichem Werkstoff positioniert sind.

7. Bolometrischer Detektor für eine elektromagnetische Strahlung nach Anspruch 6, **dadurch gekennzeichnet:**

    • **dass** das erste Gitter (5A) von der Schicht (6) aus empfindlichem Werkstoff mit Hilfe einer ersten Schicht (7A) aus einem dielektrischen Werkstoff elektrisch isoliert ist, die örtlich Öffnungen aufweist, die jeweils auf Höhe einer der Zonen des Kontakts zwischen den besonderen leitenden Linien (5A1, 5A2, 5A3, 5A4) des ersten Gitters (5A) mit der Schicht (6) aus empfindlichem Werkstoff gelegen sind;
    • **dass** eine zweite Schicht (7B) aus dielektrischem Werkstoff zwischen den leitenden Linien des ersten Gitters (5A), die in einschränkender Weise als Absorber (5Aa) dienen, und den leitenden Linien (5B) des zweiten Gitters eingesetzt ist;
    • und **dass** der Kontakt zwischen den besonderen leitenden Linien (5A1,I5A2, 5A3, 5A4) des ersten Gitters (5A) und manchen leitenden Linien des zweiten Gitters (5B) auf Höhe von Öffnungen (8) hergestellt ist, die in der zweiten Schicht (7B) aus dielektrischem Werkstoff vorgesehen sind.

8. Bolometrischer Detektor für eine elektromagnetische Strahlung nach einem der Ansprüche 1 bis 5, **dadurch gekennzeichnet, dass** eines der Gitter (5A, 5B) unter der Schicht (6) aus empfindlichem Werkstoff positioniert ist und dass das andere Gitter über der Schicht (6) aus empfindlichem Werkstoff positioniert ist.

9. Bolometrischer Detektor für eine elektromagnetische Strahlung nach Anspruch 8, **dadurch gekennzeichnet:**

   • **dass** das erste Gitter (5A) unter der Schicht (6) aus empfindlichem Werkstoff positioniert ist und von dieser mit Hilfe einer ersten Schicht (7A) aus einem dielektrischen Werkstoff isoliert ist, die örtlich Öffnungen auf Höhe der Zonen des Kontakts zwischen den besonderen leitenden Linien (5A1, 5A2, 5A3, 5A4) des ersten Gitters (5A) mit der Schicht (6) aus empfindlichem Werkstoff aufweist;
   • **dass** das zweite Gitter (5B) über der Schicht (6) aus empfindlichem Werkstoff positioniert ist und von dieser mit Hilfe einer zweiten Schicht (7B) aus einem dielektrischen Werkstoff isoliert ist;
   • und **dass** die elektrischen Kontaktpunkte zwischen den beiden Gittern (5A) und (5B) durch die Bildung von durchgehenden Öffnungen erhalten werden, die in der Schicht (6) aus diesem Werkstoff und in der zweiten Schicht (7B) aus dielektrischem Werkstoff vorgesehen sind.

10. Bolometrischer Detektor für eine elektromagnetische Strahlung nach Anspruch 8, **dadurch gekennzeichnet:**

   • **dass** das erste Gitter (5A) über der Schicht (6) aus empfindlichem Werkstoff positioniert ist und von dieser mit Hilfe einer ersten Schicht (7A) aus einem dielektrischen Werkstoff isoliert ist, die örtlich Öffnungen auf Höhe der Zonen des Kontakts zwischen den besonderen leitenden Linien (5A1, 5A2, 5A3, 5A4) des ersten Gitters (5A) mit der Schicht (6) aus empfindlichem Werkstoff aufweisen;
   • **dass** das zweite Gitter (5B) unter der Schicht (6) aus empfindlichem Werkstoff positioniert ist und von dieser mit Hilfe einer zweiten Schicht (7B) aus einem dielektrischen Werkstoff isoliert ist;
   • und **dass** die Punkte des elektrischen Kontakts zwischen den beiden Gittern (5A) und (5B) durch die Bildung von durchgehenden Öffnungen erhalten werden, die in der Schicht (6) aus leitendem Werkstoff und in der zweiten Schicht (7B) aus dielektrischem Werkstoff ausgespart sind.

11. Bolometrischer Detektor für eine elektromagnetische Strahlung nach einem der Ansprüche 6 und 8, **dadurch gekennzeichnet, dass** die Gesamtheit der leitenden Linien (5A) des ersten Gitters mit der Schicht (6) aus bolometrischem Werkstoff in Kontakt ist.

12. Bolometrischer Detektor für eine elektromagnetische Strahlung nach Anspruch 11, **dadurch gekennzeichnet:**

   • **dass** das Gitter (5A) über der Schicht (6) aus empfindlichem Werkstoff positioniert ist;
   • **dass** eine Schicht (7B) aus dielektrischem Werkstoff zwischen die leitenden Linien des ersten Gitters (5A) und die leitenden Linien des zweiten Gitters (5B) eingesetzt ist;
   • und **dass** der Kontakt zwischen den leitenden Linien des ersten Gitters (5A) und manchen leitenden Linien des zweiten Gitters (5B) auf Höhe von Öffnungen (8) hergestellt ist, die in der dielektrischen Schicht (7B) vorgesehen sind.

13. Bolometrischer Detektor für eine elektromagnetische Strahlung nach Anspruch 11, **dadurch gekennzeichnet:**

   • **dass** das Gitter (5A) unter der Schicht (6) aus empfindlichem Werkstoff positioniert ist;
   • **dass** das zweite Gitter (5B) über der Schicht (6) aus empfindlichem Werkstoff positioniert ist und von dieser mit Hilfe einer Schicht (7B) aus einem dielektrischen Werkstoff isoliert ist;
   • und **dass** die Punkte des elektrischen Kontakts zwischen den beiden Gittern (5A) und (5B) durch die Herstellung von durchgehenden Öffnungen erhalten werden, die in der Schicht (6) aus diesem Werkstoff und der Schicht (7B) aus dielektrischem Werkstoff ausgespart sind.

14. Vorrichtung zur Erfassung einer elektromagnetischen Strahlung vom bolometrischen Typ, **dadurch gekennzeichnet, dass** sie ein oder mehrere bolometrische Detektoren nach einem der Ansprüche 1 bis 13 benutzt und dass der oder die Detektoren an dem Lesekreis (1) mit Hilfe einer Säulenstruktur (3) befestigt sind.

15. Vorrichtung zur Erfassung einer elektromagnetischen Strahlung vom bolometrischen Typ nach Anspruch 14, **dadurch gekennzeichnet, dass** sie eine Matrixstruktur aufweist, die mindestens zwei bolometrischen Detektoren umfasst.

**16.** Verfahren zur Herstellung eines Detektors für eine elektromagnetische Strahlung vom bolometrischen Typ nach Anspruch 1, das darin besteht, dass man, ausgehend von einem Lesekreis, der insbesondere auf einem Siliciumsubstrat gebildet ist:

• zunächst eine erste zu opfernde Hilfsschicht auf dem Siliciumsubstrat bildet, die dazu bestimmt ist, durch jedes beliebige bekannte Mittel nach Herstellung des Detektors entfernt zu werden, um den Lesekreis (1) von dem Erfassungsmodul oder empfindlichen Abschnitt thermisch abzukoppeln;

• auf der zu opfernden Hilfsschicht eine Schicht aus einem bolometrischen empfindlichen Werkstoff bildet,

• auf der empfindlichen Schicht (6) eine Schicht (7A) aus einem dielektrischen Werkstoff aufbringt;

• mit Hilfe einer lithographischen Maske und durch Gravur lineare Öffnungen von begrenzter Dicke in dieser Schicht herstellt, um Kontaktzonen mit der Schicht (6) aus empfindlichem Werkstoff zu bilden;

• eine erste Schicht aus elektrisch leitendem Werkstoff aufbringt;

• mit Hilfe einer lithographischen Maske ein erstes Gitter (5A) von leitenden Linien herstellt, von denen manche auf Höhe der Öffnungen gelegen sind, die in der Schicht (7A) aus dielektrischem Werkstoff ausgespart sind, und deshalb mit dem empfindlichen Werkstoff (6) in elektrischem Kontakt sind;

• die leitenden Träger oder Säulen (3) durch Auflegen einer neuen lithographischen Maske herstellt, die dazu bestimmt ist, die gesamte Struktur zu schützen, mit Ausnahme von Öffnungen von kleinen Abmessungen, wobei diese Öffnungen durch die Oberflächenschichten in der Reihenfolge (leitender Werkstoff (5A), dielektrischer Werkstoff (7A), bolometrischer Werkstoff (6)) graviert werden, dann durch die zu opfernde Schicht, bis man zu der Fläche der zuvor auf der Oberfläche des Lesekreises (1) hergestellten Kontakte kommt, und dann durch Aufbringen mindestens einer Metallschicht, dann durch Gravur dieser Metallschicht oder Metallschichten mit Hilfe einer lithographischen Maske außerhalb der Säulen (3);

• auf dem Gitter (5A) eine zweite Schicht (7B) aus dielektrischem Werkstoff aufbringt;

• mit Hilfe einer lithographischen Maske und durch Gravur Öffnungen (8) in der dielektrischen Schicht (7B) herstellt, die auf Höhe der leitenden Linien des Gitters (5A) in Kontakt mit dem empfindlichen Werkstoff (6) lokalisiert sind;

• eine zweite Schicht aus elektrisch leitendem Werkstoff auf die Schicht (7B) aus dielektrischem Werkstoff aufbringt;

• mit Hilfe einer lithographischen Maske ein zweites Gitter (5B) von leitenden Linien herstellt, die im Wesentlichen rechtwinklig zu den das erste Gitter (5A) bildenden Linien gerichtet sind;

• mit Hilfe einer lithographischen Maske und durch Gravur die Trägerarme (4) und der Umfangsumriss der Membran bzw. des empfindlichen Abschnitts des Detektors definiert;

• und schließlich die zu opfernde Schicht entfernt, so dass die Membran bzw. der empfindliche Abschnitt über dem Substrat (1) aufgehängt ist.

**Fig. 2**

ART ANTERIEUR

**Fig. 1**

ART ANTERIEUR

EP 1 703 266 B1

**Fig. 5**

**Fig. 4**

**Fig. 3**

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0828145 A
- FR 2796148
- FR 2796148 A
- US 5367167 A
- US 5760398 A
- WO 2002088648 A